# EUROPÄISCHE PATENTSCHRIFT

(11) **EP 2 493 674 B1**
(45) Veröffentlichungstag und Bekanntmachung des Hinweises auf die Patenterteilung: **16.04.2014**
(21) Anmeldenummer: 10805380.2
(22) Anmeldetag: 21.10.2010
(51) Int. Cl.: B29C 49/42, B65G 47/84, B65G 47/90, B67C 3/24, B29C 49/06, B29C 49/36, B29C 49/64

(54) **VORRICHTUNG ZUR HANDHABUNG VON WERKSTÜCKEN**
DEVICE FOR HANDLING WORKPIECES
DISPOSITIF DE MANIPULATION DE PIÈCES

(30) Priorität: 30.10.2009 DE 102009051656
(43) Veröffentlichungstag der Anmeldung: 05.09.2012
(73) Patentinhaber: KHS Corpoplast GmbH, 22145 Hamburg (DE)
(72) Erfinder: BAUMGARTE, Rolf, 22926 Ahrensburg (DE); LEWIN, Frank, 22889 Tangstedt (DE); LITZENBERG, Michael, 21502 Geesthacht (DE); LINKE, Michael, 22159 Hamburg (DE)
(74) Vertreter: Hausfeld, Norbert
(86) Internationale Anmeldenummer: PCT/DE2010/001248
(87) Internationale Veröffentlichungsnummer: WO 2011/050781

(56) Entgegenhaltungen:
- WO-A1-03/068643
- WO-A1-2008/009410
- DE-A1- 3 147 285
- DE-A1-102008 055 616

## Beschreibung

Die Erfindung betrifft eine Vorrichtung zur Halterung von Werkstücken, die zangenartig ausgebildet und mit zwei Zangenarmen versehen ist, sowie bei der die Zangenarme von einer Zangenbasis gehaltert und gesteuert mindestens in einer Öffnungs- und in einer Schließpositionierung anordbar sind und bei der die Zangenbasis von einem Grundelement derart gehalten ist, dass die Zangenbasis ab einer vorgegebenen Stellkraft freigegeben und mindestens bereichsweise relativ zum Grundelement verschwenkbar angeordnet ist.

Die Erfindung betrifft darüber hinaus eine Vorrichtung zur Blasformung von Behältern, die mindestens eine Blasstation mit einer Blasform und mindestens ein Tragelement zur Positionierung von Vorformlingen entlang eines Transportweges aufweist. Hierbei kann vorgesehen sein, dass das Tragelement von einem rotierenden Übergaberad gehalten ist, relativ zu dem das Tragelement beweglich gelagert ist, sowie dass eine Kurvensteuerung für das Tragelement verwendet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Handhabung der Vorformlinge und zur Handhabung der geblasenen Behälter werden innerhalb der Blasmaschine häufig sogenannte Übergaberäder verwendet, die mit Tragelementen für die Vorformlinge oder Flaschen ausgestattet sind. Die Tragelemente können hierbei entweder direkt auf die Vorformlinge oder Flaschen zugreifen, oder separate Transportelemente befördern, die ihrerseits direkt die Vorformlinge oder Flaschen haltern. Zur Unterstützung von Übergabevorgängen sind die Tragelemente relativ zum Übergaberad typischerweise verschwenkbar gelagert. Zusätzlich ist häufig auch eine Teleskopierbarkeit realisiert. Zur Positionsvorgabe für die Tragelemente werden Kurvensteuerungen verwendet. Die Tragelemente werden hierzu mit Kurvenrollen an ortsfest angeordneten Kurven vorbeigeführt.

Ein Problem bei der Verwendung von derartigen mit Tragelementen versehenen Übergaberädern besteht darin, bei einem Auftreten von mechanischen Störungen, insbesondere bei einem Auftreten von Kollisionen, schwere Schäden zu vermeiden. Hierzu ist es bekannt, die Tragarme unter Verwendung von Überlastkupplungen im Bereich der Übergaberäder zu lagern. Derartige Überlastkupplungen sind zum einen teuer und vergrößern darüber hinaus das Baugewicht der rotierenden Übergaberäder.

Es ist ebenfalls bereits bekannt, die Tragarme mit aktiven Positionierelementen auszustatten, die pneumatisch oder elektrisch ein Ausfahren bzw. Einfahren der Tragarme derart vorgeben, dass diese in einer Arbeitspositionierung oder einer Ruhepositionierung angeordnet sind. Entsprechende Positioniereinrichtungen verursachen jedoch relativ hohe Kosten und vergrößern das Baugewicht des Übergaberades, so dass vergrößerte Trägheitseigenschaften auftreten.

Ein weiteres Problem bei der Verwendung von zangenartigen Halterungselementen besteht darin, dass diese vergleichsweise teuer sind und bei einem Auftreten von Verschleiss oder mechanischen Beschädigungen eine Auswechselung der Zangen einen entsprechend großen Arbeitsaufwand und hiermit im zusammenhang stehende Arbeitskosten zur Folge hat.

In der DE 10 2007 054 388 wird zwar bereits ein zangenartiges Halterungselement beschrieben, das bei einer Einwirkung von Überlast auslenkbar im Bereich eines Trägers gehaltert ist, die betreffende Konstruktion erweist sich jedoch unter Berücksichtigung der Vielzahl von erforderlichen Bauelementen als teuer und somit nur bedingt für einen Einsatz in großen Stückzahlen geeignet.

Weitere Vorrichtungen zur Halterung von Werkstücken werden in WO 03068643, DE 3147285 und WO 2008009410 offenbart.

Aufgabe der vorliegenden Erfindung ist es, eine Vorrichtung der einleitend genannten Art derart zu konstruieren, dass bei einfachem konstruktiven Aufbau eine hohe Betriebssicherheit unterstützt wird.

Diese Aufgabe wird erfindungsgemäß mit einen Lösung nach Anspruch 1 gelöst.

Erfindungsgemäß wird somit eine Zange bereitgestellt, die bei einem Übersteigen einer vorgegebenen Belastung auslenkbar angeordnet ist. Insbesondere ist daran gedacht, dass die Zange durch einen Kontakt mit dem zu übergebenden Werkstück oder durch einen Kontakt mit einem Führungselement betätigt wird. Es ist aber auch möglich, dass die Zange aktiv gesteuert ist. Eine Kombination der Eigenschaften einer Auslenkbarkeit und einer passiven oder aktiven Steuerung stellt eine für den Fachmann neue Funktionalität von Haltezangen bereit. Eine Anwendung kann beispielsweise bei Blasmaschinen zur Halterung von Vorformlingen, Flaschen oder von Transportelementen oder bei Füllmaschinen zur Halterung der zu befüllenden Behälter erfolgen.

Die Anordnung der beiden Gegenelemente neben den Seitenflächen der Zangenbasis ermöglicht es, bei einem Auftreten einer Überlast ein Wegschwenken der Zangenbasis zu ermöglichen und hierbei vorgebbare Kräfte auf die Zangenbasis einwirken zu lassen.

Kinematische Randbedingungen können in einfacher Weise dadurch berücksichtigt werden, dass die Gegenelemente relativ zum Grundelement verschwenkbar angeordnet sind.

Eine Mindeststellkraft kann dadurch vorgegeben werden, dass die Gegenelemente von einer Druckfeder beaufschlagt sind.

Darüber hinaus ist auch daran gedacht, dass die Gegenelemente von einer Zugfeder beaufschlagt sind.

Zu einer kompakten und mechanisch belastbaren Konstruktion trägt es bei, dass die Feder mit einer Federlängsachse im wesentlichen quer zu einer Längsachse des Grundelementes angeordnet ist.

Eine konstruktiv einfache Gestaltung wird dadurch unterstützt, dass die Seitenflächen im wesentlichen eben ausgebildet sind.

Ebenfalls trägt es zu einer preiswerten Fertigung bei, dass sich die Seitenflächen im wesentlichen parallel zueinander erstrecken.

Öffnungs- und Schließbewegungen der Zange ohne Beeinflussung durch die Gegenelemente werden dadurch unterstützt, dass sich Enden der Gegenelemente in Richtung der Längsachse ausgehend vom Grundelement höchstens bis zu einer Ebene erstrecken, die sich durch eine Mittellinie einer Drehachse der Zangenarme hindurch erstreckt.

Eine spielfreie Verbindung der Einzelteile wird dadurch erreicht, dass das Grundelement gegen eine Bezugsfläche des Tragarmes verspannt angeordnet ist.

Eine einfache Zangenkonstruktion wird dadurch erreicht, kennzeichnet, dass die Zangenarme von mindestens einer Feder relativ zueinander verspannt angeordnet sind.

Eine typische Anwendung besteht darin, dass das Tragelement an einem umlaufenden Förderelement befestigt ist.

Beispielsweise ist daran gedacht, dass das Förderelement als eine Kette ausgebildet ist.

Ein weiteres Anwendungsgebiet wird dadurch erschlossen, dass das Förderelement als ein Übergaberad ausgebildet ist.

Ein bevorzugtes Anwendungsgebiet besteht darin, dass die Zangenbasis und das Grundelement als Teil einer Blasmaschine ausgebildet sind.

Unter anderem ist auch daran gedacht, dass die Zangenbasis und das Grundelement als Teil eines Blasmoduls einer Blasmaschine ausgebildet sind.

Des weiteren ist es möglich, dass die Zangenbasis und das Grundelement als Teil eines Blasrades einer Blasmaschine ausgebildet sind.

Eine zangenartige Greiffunktion wird dadurch unterstützt, dass die Zangenarme von Schwenkgelenken relativ zur zangenbasis verschwenkbar angeordnet sind.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Übergaberades mit einer Mehrzahl von positionierbaren Tragarmen,
- Fig. 6: eine perspektivische Darstellung eines zangenartigen Halteelementes in einem geschlossenen Zustand der Zange,
- Fig. 7: die Anordnung gemäß Figur 6 in einem geöffneten Zustand der Zange,
- Fig. 8: die Anordnung gemäß Figur 6 und Figur 7 nach einer Auslenkung der Zangenbasis relativ zum Grundelement,
- Fig. 9: einen Horizontalschnitt durch die Anordnung gemäß Figur 6,
- Fig. 10: einen Horizontalschnitt durch die Anordnung gemäß Figur 7 und
- Fig. 11: einen Horizontalschnitt durch die Anordnung gemäß Figur 8.

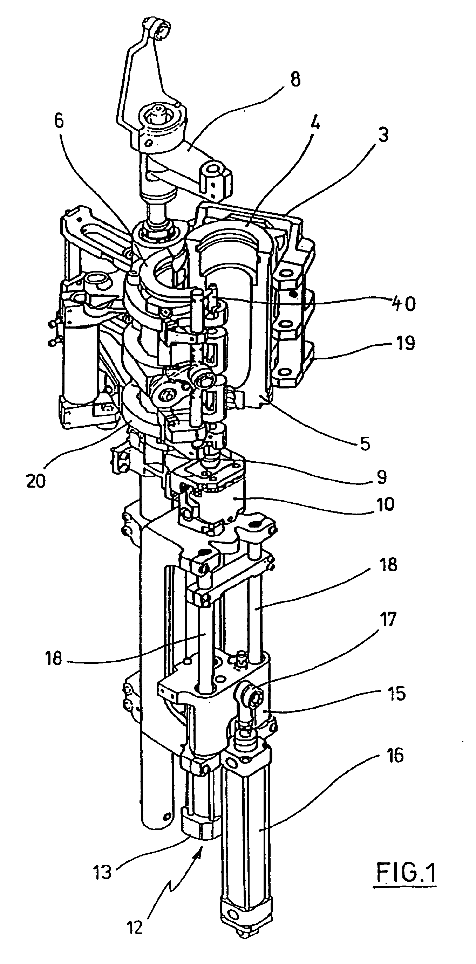

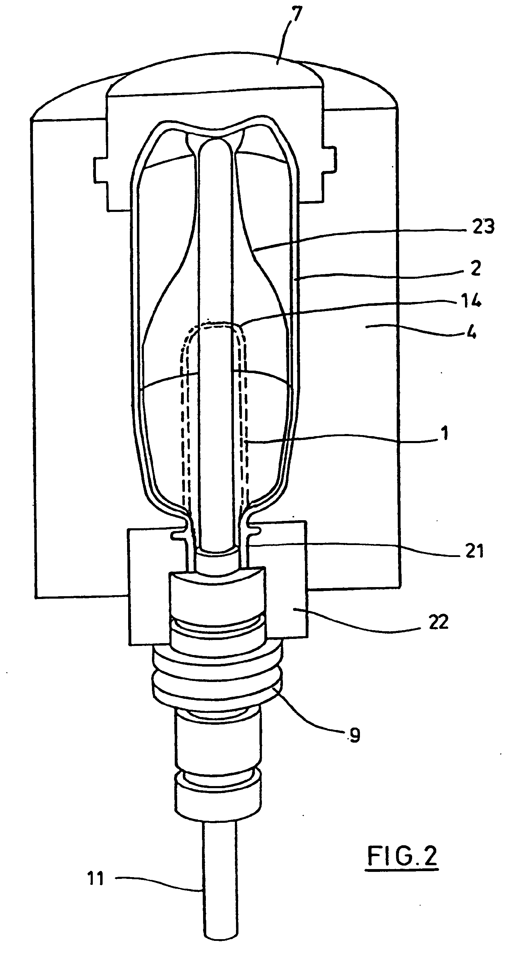

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlusskolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine verriegelung der Träger (19, 20) relativ zueinander mit Hilfe einer verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

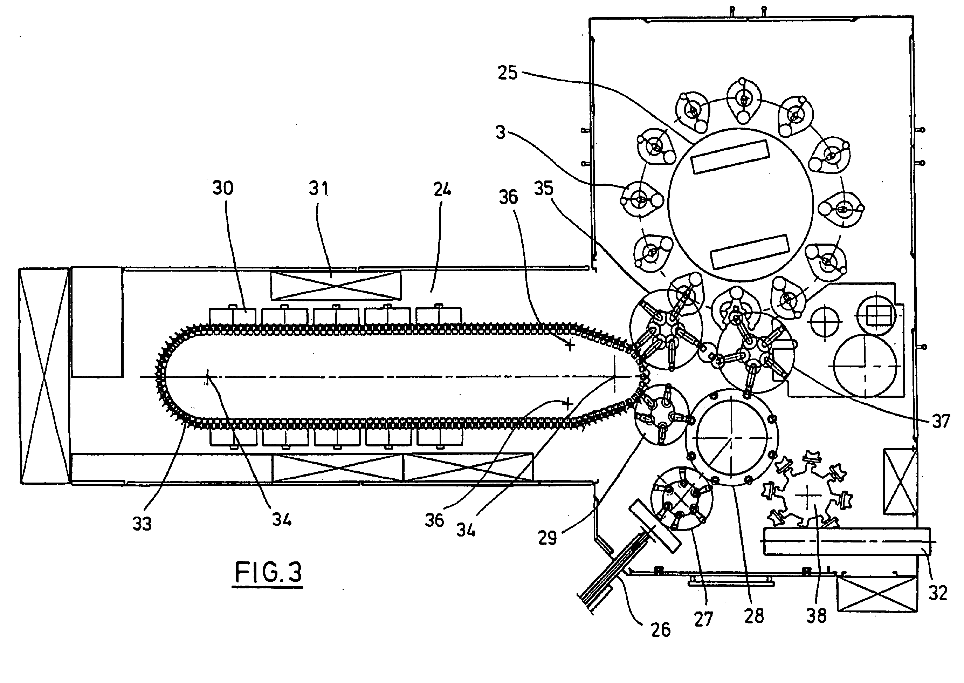

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

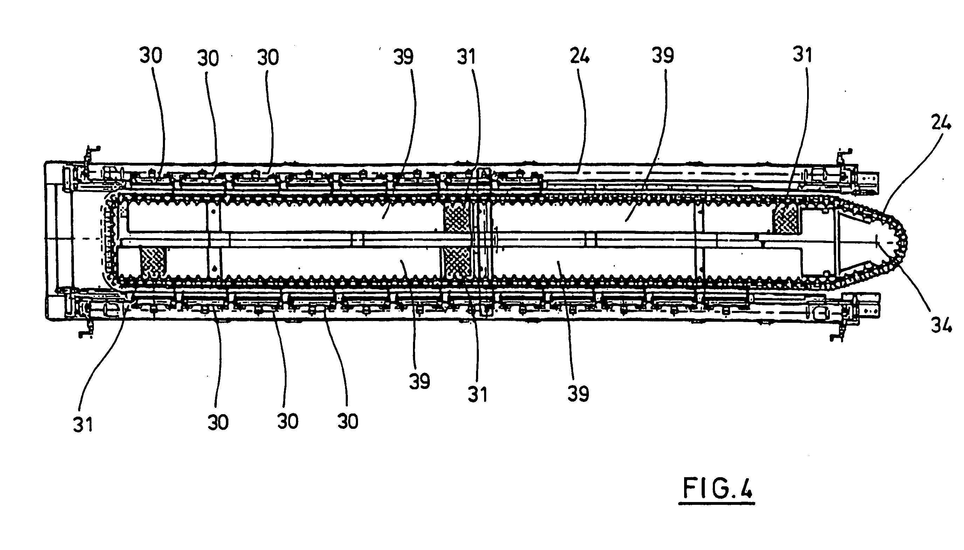

In der in Fig. 4 dargestellten modifizierten Heizstrecke (24) können durch die größere Anzahl von Heizstrahlern (30) eine größere Menge von Vorformlingen (1) je zeiteinheit temperiert werden. Die Gebläse (31) leiten hier Kühlluft in den Bereich von Kühlluftkanälen (39) ein, die den zugeordneten Heizstrahlern (30) jeweils gegenüber liegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

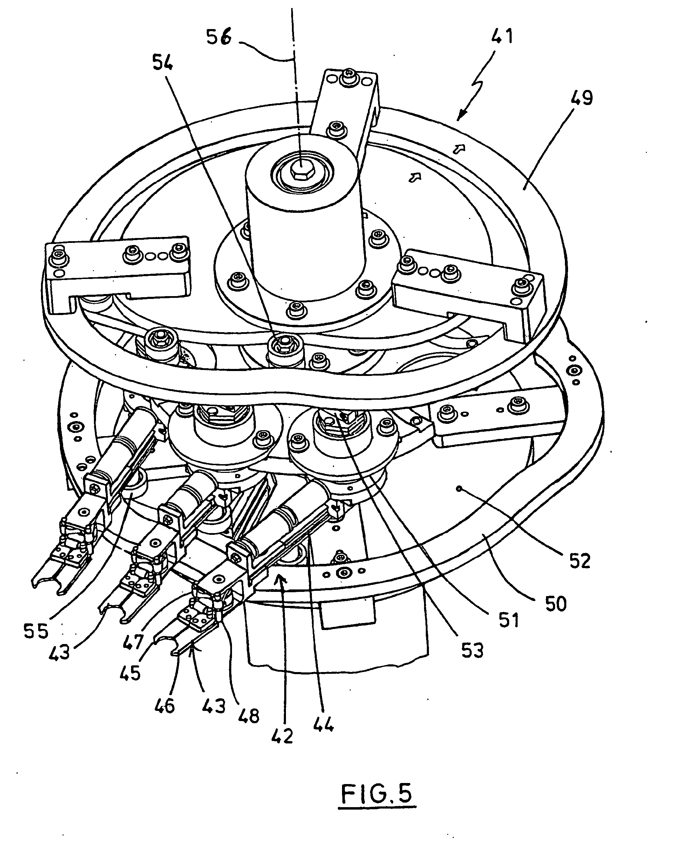

Fig. 5 zeigt ein Übergaberad (41), das beispielsweise in die Positionen für mindestens eines der Übergaberäder (27, 28, 29) eingebaut werden kann. Das Übergaberad (41) ist mit Tragelementen (42) versehen, die zur Handhabung von Vorformlingen (1) und/oder Behältern (2) dienen. Beim dargestellten Ausführungsbeispiel ist das Tragelement (42) aus einem Handhabungselement (43) und einem Tragarm (44) ausgebildet. Das Handhabungselement (43) ist beim dargestellten Ausführungsbeispiel zangenartig realisiert und weist zwei Zangenarme (45, 46) auf, die beweglich von einer Zangenbasis (47) gehaltert sind. Die Zangenbasis (47) ist in ein Grundelement (48) einrastbar, das vom Tragarm (44) gehalten ist. Derartige Handhabungselemente (43) ergreifen die Vorformlinge (1) oder Behälter (2) direkt. Die Handhabungselemente (43) können aber auch derart realisiert sein, dass ein Kontakt mit Transportelementen vorgesehen ist, die ihrerseits die Vorformlinge (1) oder Behälter (2) tragen. Ein derartiges Transportelement kann beispielsweise als Transportdorn (9) realisiert sein, auf den die Vorformlinge (1) aufgesteckt werden oder in den die Vorformlinge (1) mit ihrem Mündungsbereich eingeführt werden.

Fig. 5 veranschaulicht, dass zur Steuerung von Positionierbewegungen der Tragelemente (42) zwei Kurvenbahnen (49, 50) verwendet sind, die in vertikaler Richtung übereinander angeordnet sind. Die Tragarme (44) sind über Schwenkgelenke (51) an einem Zentralelement (52) des Übergaberades (41) befestigt. Im Bereich der Schwenkgelenke (51) weisen die Tragarme (44) Querhebel (53) auf, die über eine Kurvenrolle (54) entlang der Kurvenbahn (49) geführt sind. Bei einer Rotation des Zentralelementes (52) werden hierdurch Schwenkbewegungen der Tragarme (44) vorgegeben. Bei dem dargestellten Ausführungsbeispiel sind die Kurvenrollen (54) innenseitig entlang der Kurvenbahn (49) geführt.

Die Tragarme (44) sind teleskopierbar ausgebildet und unter Verwendung einer Kurvenrolle (55) entlang der Kurvenbahn (50) geführt, um eine Teleskopierbewegung des Tragarmes (44) vorzugeben. Bei dem dargestellten Ausführungsbeispiel ist auch die Kurvenrolle (55) innenseitig entlang der Kurvenbahn (50) geführt. Bei einem typischen Arbeitsablauf rotiert das Übergaberad (41) um seine Drehachse (56) herum.

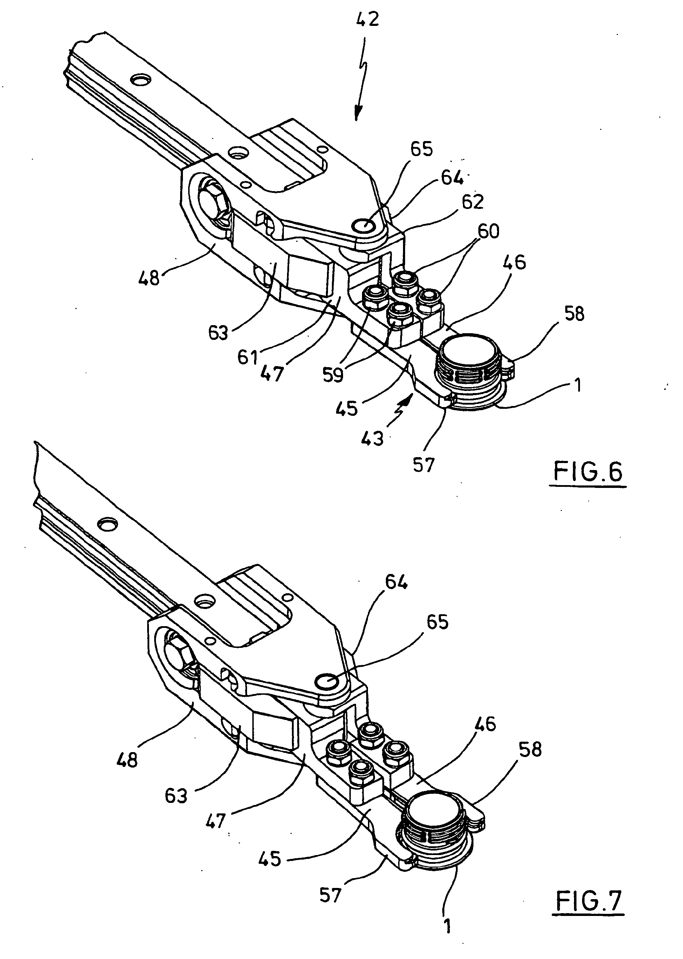

Fig. 6 veranschaulicht in einer perspektivischen Darstellung die Konstruktion des Grundelementes (48) und der Zangenbasis (47) mit den Zangenarmen (45, 46). Es ist erkennbar, dass die Zangenarme (45, 46) Greifenden (57, 58) aufweisen, die zur teilweisen Umschließung eines Halsbereiches eines Vorformlings (1) oder eines Behälters (2) ausgebildet sein können. Die Zangenarme (45, 46) sind über Verbindungselemente (59, 60) mit der Zangenbasis (47) verbunden.

Aus Figur 6 ist ebenfalls erkennbar, dass benachbart zu Seitenflächen (61, 62) der Zangenbasis (47) jeweils Gegenelemente (63, 64) angeordnet sind. Ebenfalls ist eine Drehachse (65) zu erkennen, um die herum die Zangenbasis (47) relativ zum Grundelement (48) verschwenkbar angeordnet ist.

Beim Betriebszustand gemäß Figur 6 ergreifen die Zangenarme (45, 46) mit ihren Greifenden (57, 58) den Vorformling (1) bzw. einen Behälter (2).

Figur 7 zeigt die Anordnung gemäß Figur 6 in einem geöffneten Zustand der Zange. Die Zangenarme (45, 46) haben sich hierbei leicht voneinander entfernt, so dass die Greifenden (57, 58) den Vorformling (1) bzw. den Behälter (2) freigeben.

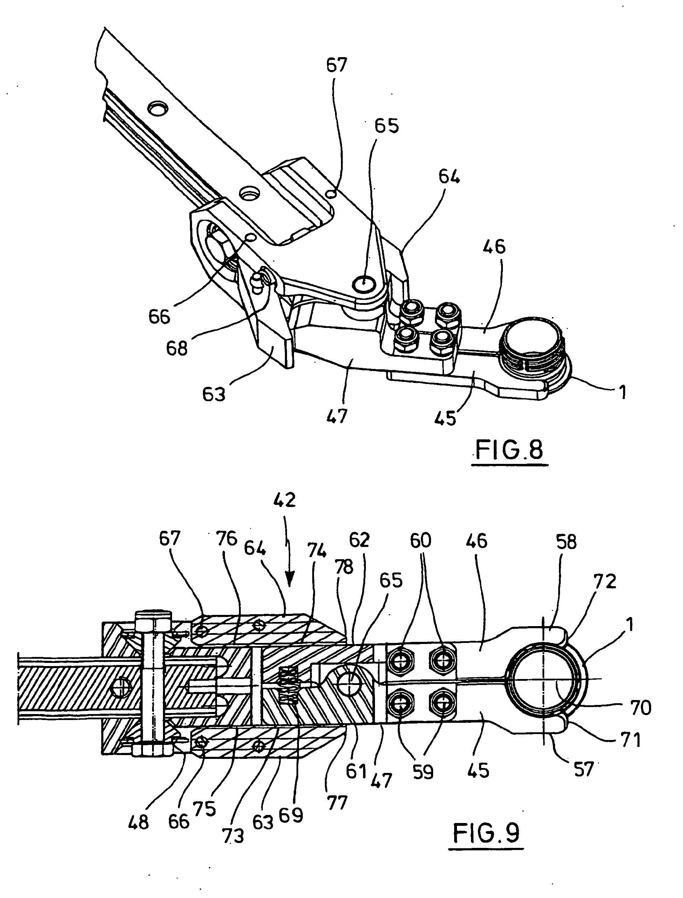

Figur 8 zeigt einen Betriebszustand der Zange, bei dem die Zangenbasis (47) relativ zum Grundelement (48) ausgelenkt angeordnet ist. Dies erfolgt typischerweise als Folge einer Einwirkung einer Überlast. Die Zangenbasis (47) ist dabei um die Drehachse (65) herum verschwenkt. Es ist zu erkennen, dass die Gegenelemente (63, 64) um Drehachsen (66, 67) herum verschwenkbar angeordnet sind. Hierdurch kann die Zangenbasis (47) die Gegenelemente (64, 64) bei der Durchführung einer Ausweichbewegung geeignet positionieren. Die Gegenelemente (64, 64) werden von einer Feder (68) derart verspannt, dass die Gegenelemente (63, 64) in die in Figur 6 und Figur 7 dargestellte Grundpositionierung geführt werden. Eine Auslenkung der Zangenbasis (47) erfolgt hierdurch entgegen der Kraft der Feder (68).

Figur 9 zeigt einen Horizontalschnitt durch die Anordnung gemäß Figur 6. Der Vorformling (1) bzw. ein nicht dargestellter Behälter (2) sind von den Greifenden (57, 58) der Zangenarme (45, 46) ergriffen und vorzugsweise oberhalb eines Stützringes beaufschlagt. Beim dargestellten Ausführungsbeispiel sind die Zangenarme (45, 46) von einer Feder (69) gegeneinander abgestützt. Die Feder ist hierbei vorzugsweise quer zu einer Längsachse (70) des Tragelementes (42) angeordnet. Ebenfalls liegt bevorzugt eine Ausbildung als Druckfeder vor.

Die Feder (69) ist mit einem Abstand zur Drehachse (45) und in einem den Greifenden (57, 58) abgewandten Bereich der Zangenarme (45, 46) positioniert. Hierdurch wird erreicht, dass die Greifenden (57, 58) gegen den vorformling (1) bzw. den Behälter (2) gedrückt werden und ohne äußere Einwirkung in diesem Zustand verbleiben. Die vorliegende Konstruktion ist somit insbesondere dafür geeignet, eine Zange ohne externe aktive Betätigungselemente auszubilden. Zur Erleichterung eines Einführens des Vorformlings (1) bzw. des Behälters (2) zwischen die Greifenden (57, 58) können diese mit Rollen (71, 72) versehen sein, um Reibkräfte zu vermeiden. Durch eine geeignete Führung kann der Vorformling (1) bzw. der Behälter (2) somit einfach zwischen die Greifenden (57, 58) gedrückt werden bzw. bei einer Einwirkung einer geeigneten Kraft wieder von diesen freigegeben werden.

Im Grundzustand gemäß Figur 9 liegen die Gegenelemente (63, 64) mit Führungsflächen (73, 74) an den Seitenflächen (61, 62) der Zangenarme (45, 46) an. Ebenfalls liegen die Gegenelemente (63, 64) mit ihren Führungsflächen (73, 74) an Anschlagflächen (75, 76) des Grundelementes (48) an und werden durch die in Figur 9 nicht erkennbare Feder (68) gegen diese Anschlagflächen (75, 76) verspannt. Aufgrund des Kontaktes der Führungsflächen (73, 74) mit den Anschlagflächen (75, 76) ist die Position der Gegenelemente (63, 64) in diesem Grundzustand exakt vorgegeben. Aufgrund des ebenfalls vorliegenden Kontaktes zwischen den Führungsflächen (73, 74) und den Seitenflächen (61, 62) ist ebenfalls die Positionierung der Zangenbasis (47) exakt vorgegeben. Es ist somit keine zusätzliche Rastung zur Definition eines Grundzustandes erforderlich.

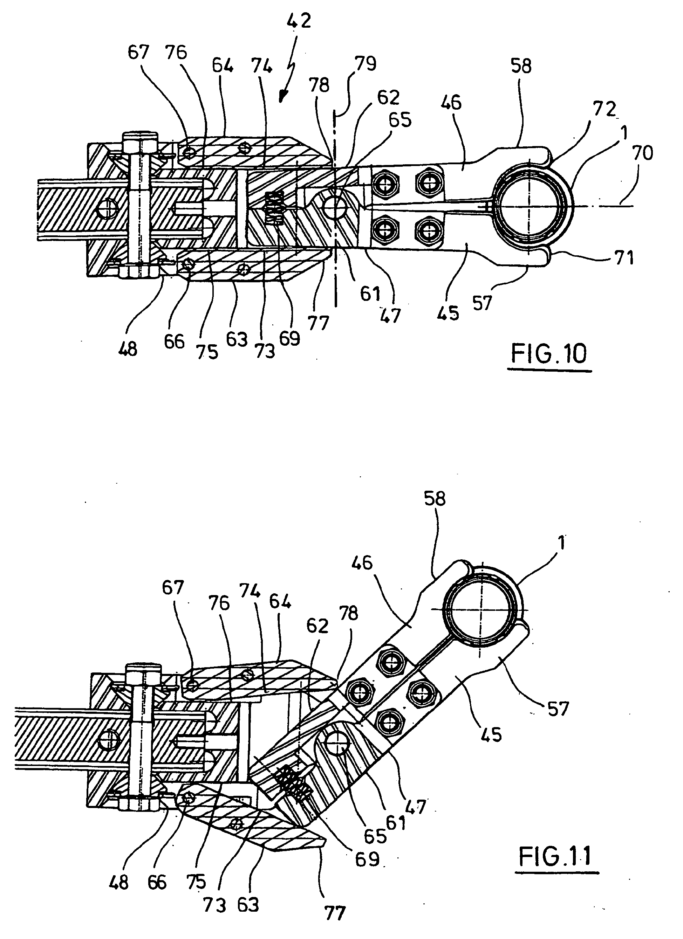

Figur 10 zeigt das Tragelement (42) im Betriebszustand gemäß Figur 7 und in einem Horizontalschnitt wie in Figur 9. Die Greifenden (57, 58) der Zangenarme (45, 46) sind hierbei auseinander gedrückt und geben den Vorformling (1) frei. Hierdurch sind die Zangenarme (45, 46) um die Drehachse (45) herum verschwenkt und drücken die Feder (69) zusammen.

Aus Figur 10 ist zu erkennen, dass den Drehachsen (66, 67) abgewandt angeordnete Enden (77, 78) der Gegenelemente (63, 64) etwa auf einem Niveau einer Mittellinie (79) der Drehachse (65) angeordnet sind. Hierdurch wird gewährleistet, dass die Gegenelemente (63, 64) bei einem Öffnen der Zangenarme (45, 46) nicht auseinander gedrückt werden, zugleich aber weiterhin im Bereich der Enden (77, 78) eine Führung der Zangenarme (45, 46) zur Beibehaltung der Grundposition der Zangenbasis (47) durchführen.

Figur 11 zeigt einen Horizontalschnitt durch den Betriebszustand des Tragelementes (42) entsprechend Figur 8. Die Zangenbasis (47) ist hierbei als Folge einer Einwirkung einer Überlast um die Drehachse (65) herum verschwenkt und drückt die Gegenelemente (63, 64) auseinander. Die Gegenelemente (63, 64) werden hierbei entgegen der Kraft der in Figur 11 nicht zu erkennenden Feder (68) um die Drehachsen (66, 67) herum verschwenkt.

Gemäß der in Figur 11 dargestellten Konstruktion ist vorgesehen, dass die Zangenbasis (47) nicht in der ausgeschwenkten Positionierung fixiert wird, was grundsätzlich ebenfalls möglich wäre. Beim dargestellten Ausführungsbeispiel wird die Zangenbasis (47) vielmehr durch die Gegenelemente (63, 64) derart mit einer Kraft beaufschlagt, dass nach einer Beendigung der Einwirkung der die Auslenkung verursachenden Störkraft die Zangenbasis (47) wieder automatisch in die Grundposition zurückkehrt. Bei einer nur kurzzeitig einwirkenden Störung wird somit ohne erforderliche äußere Einwirkungen ein betriebsfähiger Zustand wieder erreicht.

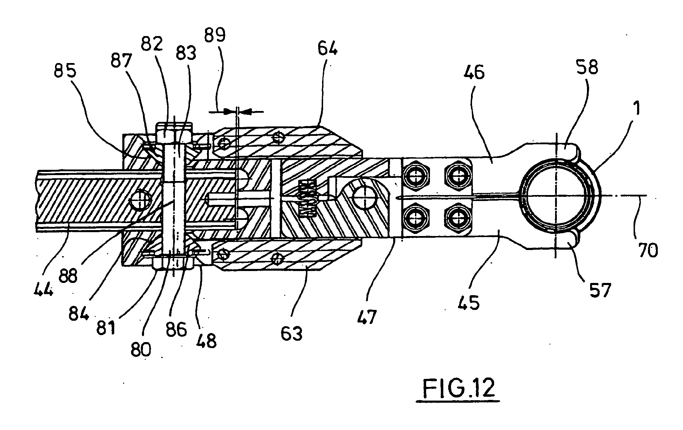

Figur 12 zeigt die Anordnung gemäß Figur 9 in einem nicht vollständig montierten Zustand. Eine Montage erfolgt in der Art, dass in der Regel die Zangenbasis (47) bereits am Grundelement (48) vormontiert ist und dass dann in einem endgültigen Montageschritt das Grundelement (48) mit dem Tragarm (44) verbunden wird. Zur Gewährleistung einer optimalen Funktion ist es erforderlich, dass das Grundelement (48) spielfrei am Tragarm (44) befestigt ist. Dabei ist anzustreben, dass diese spielfreie Montage mit einem möglichst geringen Montageaufwand und mit einfachen mechanischen Mitteln erreicht wird.

Gemäß der Ausführungsform in Figur 6 bis Figur 12 wird dies dadurch erreicht, dass das Grundelement (48) von einem einzigen speziell geführten Bolzen (80) mit dem Tragarm (44) verbunden wird. Der Bolzen (80) weist einen Bolzenkopf (81) auf und auf einem Außengewinde des Bolzens (80) wird eine Mutter (82) aufgeschraubt. In einem montierten Zustand ist der Bolzen (80) durch eine Ausnehmung (83) des Tragarmes (44) hindurchgeführt, die im wesentlichen quer zur Längsachse (70) verläuft. Benachbart zum Bolzenkopf (81) einerseits und zur Mutter (82) andererseits sind im Bereich des Grundelementes (48) zwei kegelstumpfartige Ausnehmungen (84, 85) angeordnet, die sich in Richtung auf den Tragarm (44) verjüngen. In die Ausnehmungen (84, 85) sind kegelstumpfartige zentrierelemente (86, 87) eingesetzt, durch die sich der Bolzen (80) hindurch erstreckt. Der Bolzen (80) weist eine Bolzenlängsachse (88) auf.

Der Bolzen (80) ist im wesentlichen passgenau durch die Ausnehmung (83) hindurch geführt, so dass die Bolzenlängsachse (88) und eine Längsachse der Ausnehmung (83) im wesentlichen identisch verlaufen. Eine Längsachse der Ausnehmungen (84, 85) weist hingegen einen seitlichen Versatz zur Bolzenlängsachse (88) auf. Es ergibt sich hierdurch zumindest in einem nicht fertig montierten Zustand ein Abstand zwischen den Längsachsen der Ausnehmungen (84, 85) und der Bolzenlängsachse (88), Die Längsachsen der Ausnehmungen (84, 85) verlaufen hierbei in der Zeichnungsebene gemäß Figur 12 auf einer der Zangenbasis (47) abgewandten Seite bezüglich der Bolzenlängsachse (88).

Bei einem Anziehen des Bolzens (80) werden die Zentrierelemente (86, 87) in Richtung auf den Tragarm (44) verspannt und ziehen aufgrund der unsymmetrischen Anordnung das Grundelement (48) gegen den Tragarm (44). Ein zunächst vorhandener Abstand (89) wird hierdurch idealerweise auf einen Wert Null reduziert.

Neben der vorstehend erläuterten Verwendung des Handhabungselementes (43) im Bereich eines Übergaberades (41) einer Blasmaschine sind auch eine Vielzahl anderer Anwendungen denkbar. Im Bereich von Blasmaschinen können beispielsweise die Vorformlinge (1) im Bereich der Heizstrecke (24) von derartigen Handhabungselementen (43) gehaltert sein. Ebenfalls ist eine Anwendung im Bereich des Blasrades (25) möglich. Ebenfalls ist an Anwendungen im Bereich von Abfüllmaschinen gedacht.

Grundsätzlich sind die erläuterten Handhabungselemente (43) überall dort einsetzbar, wo eine stationäre oder dynamische Halterung von Werkstücken erforderlich ist. Die verwendung ist somit nicht auf die vorstehend detailliert erläuterten Anwendungsbeispiele beschränkt.

## Patentansprüche

1. Vorrichtung zur Halterung von Werkstücken, die zangenartig ausgebildet und mit zwei Zangenarmen versehen ist, sowie bei der die Zangenarme (45, 46) von einer Zangenbasis (47) gehaltert mindestens in einer Öffnungs- und in einer Schliesspositionierung anordbar sind und bei der die Zangenbasis (47) von einem Grundelement (48) derart gehalten ist, dass die Zangenbasis (47) ab einer vorgegebenen Stellkraft freigegeben und mindestens bereichsweise relativ zum Grundelement (48) verschwenkbar angeordnet ist, **dadurch gekennzeichnet, dass** benachbart zu zwei Seitenflächen (61, 62) der Zangenbasis (47) jeweils ein bewegliches Gegenelement (63, 64) angeordnet ist, das von mindestens einer Feder (68) in einer Grundstellung gehalten ist, wobei die Gegenelemente (63, 64) relativ zum Grundelement (48) verschwenkbar angeordnet sind.

2. Vorrichtung nach Anspruch 1, **dadurch gekennzeichnet, dass** die Gegenelemente (63, 64) von einer Druckfeder beaufschlagt sind.

3. Vorrichtung nach Anspruch 1 bis 2, **dadurch gekennzeichnet, dass** die Gegenelemente (63, 64) von einer Zugfeder beaufschlagt sind.

4. Vorrichtung nach einem der Ansprüche 1 bis 3, **dadurch gekennzeichnet, dass** die Feder (68) mit einer Federlängsachse im wesentlichen quer zu einer Längsachse (70) des Grundelementes (48) angeordnet ist.

5. Vorrichtung nach einem der Ansprüche 1 bis 4, **dadurch gekennzeichnet, dass** die Seitenflächen (61, 62) im wesentlichen eben ausgebildet sind.

6. Vorrichtung nach einem der Ansprüche 1 bis 5, **dadurch gekennzeichnet, dass** sich die Seitenflächen (61, 62) im wesentlichen parallel zueinander erstrecken.

7. Vorrichtung nach einem der Ansprüche 1 bis 6, **dadurch gekennzeichnet, dass** sich Enden (77, 78) der Gegenelemente (63, 64) in Richtung der Längsachse (70) ausgehend vom Grundelement (48) höchstens bis zu einer Ebene erstrecken, die sich durch eine Mittellinie einer Drehachse (65) der Zangenarme (45, 46) hindurch erstreckt.

8. Vorrichtung nach einem der Ansprüche 1 bis 7, **dadurch gekennzeichnet, dass** das Grundelement (48) gegen eine Bezugsfläche des Tragarmes (44) verspannt angeordnet ist.

9. Vorrichtung nach einem der Ansprüche 1 bis 8, **dadurch gekennzeichnet, dass** die Zangenarme (45, 46) von mindestens einer Feder (69) relativ zueinander verspannt angeordnet sind.

## Claims

1. A device for holding workpieces, which is gripper-like in its design and is provided with two gripper arms, and wherein
the gripper arms (45, 46), being held by a gripper base (47), can be arranged in at least one opening position and at least one closing position, and wherein the gripper base (47) is held by a base element (48) in such a way that, starting at a predefined actuating force, the gripper base (47) is released and is arranged such that it can be pivoted in relation to the base element (48) at least in areas,
**characterised in that**
- a movable counter element (63, 64) is arranged adjacent to each of two side surfaces (61, 62) of the gripper base (47), the counter element (63, 64) being held in a basic position by at least one spring (68), wherein the counter elements (63, 64) are arranged such that they can be pivoted in relation to the base element (48).

2. The device according to Claim 1, **characterised in that** the counter elements (63, 64) are charged by a pressure spring.

3. The device according to Claims 1 to 2, **characterised in that** the counter elements (63, 64) are charged by a tension spring.

4. The device according to any one of Claims 1 to 3, **characterised in that**, with a longitudinal spring axis, the spring (68) is, in essence, arranged transversely to a longitudinal axis (70) of the base element (48).

5. The device according to any one of Claims 1 to 4, **characterised in that** the side surfaces (61, 62) are, in essence, flat in their design.

6. The device according to any one of Claims 1 to 5, **characterised in that** the side surfaces (61, 62) are, in essence, extending in parallel to each other.

7. The device according to any one of Claims 1 to 6, **characterised in that**, starting from the base element (48), the ends (77, 78) of the counter elements (63, 64) are extending in the direction of the longitudinal axis (70) no more than to a plane which extends through a centre line of a rotary axis (65) of the gripper arms (45, 46).

8. The device according to any one of Claims 1 to 7, **characterised in that** the base element (48) is arranged such that it is braced against a reference surface of the support arm (44).

9. The device according to any one of Claims 1 to 8, **characterised in that** the gripper arms (45, 46) are arranged such that they are braced in relation to each other by at least one spring (69).

## Revendications

1. Dispositif de maintien de pièces d'oeuvre réalisé en forme de pince et doté de deux branches de pince, les branches de pince (45, 46), maintenues par une base de pince (47), pouvant être placées au moins en une position d'ouverture et une position de fermeture et la base de pince (47) étant maintenue par un élément de base (48) de façon telle que la base de pince (47) est libérée à partir d'une force de réglage prédéfinie et agencée de façon à pouvoir pivoter en partie au moins par rapport à l'élément de base (48), **caractérisé en ce que**, contre chacune des deux faces latérales (61, 62) de la base de pince (47), est agencé un contre-élément mobile (63, 64) adjacent maintenu en une position initiale par au moins un ressort (68), les contre-éléments (63, 64) étant agencés de façon à pouvoir pivoter par rapport à l'élément de base (48).

2. Dispositif selon la revendication 1, **caractérisé en ce que** les contre-éléments (63, 64) sont soumis à l'action d'un ressort de pression.

3. Dispositif selon la revendication 1 à 2, **caractérisé en ce que** les contre-éléments (63,64) sont soumis à l'action d'un ressort de traction.

4. Dispositif selon l'une des revendications 1 à 3, **caractérisé en ce que** le ressort (68) est placé de façon à ce qu'un axe longitudinal de ce ressort soit essentiellement transversal par rapport à un axe longitudinal (70) de l'élément de base (48).

5. Dispositif selon l'une des revendications 1 à 4, **caractérisé en ce que** les faces latérales (61, 62) sont de conformation essentiellement plane.

6. Dispositif selon l'une des revendications 1 à 5, **caractérisé en ce que** les faces latérales (61, 62) s'étendent dans des plans essentiellement parallèles.

7. Dispositif selon l'une des revendications 1 à 6, **caractérisé en ce que** des extrémités (77, 78) des contre-éléments (63, 64) s'étendent dans le sens de l'axe longitudinal (70) de l'élément de base (48) au maximum jusqu'à un plan qui passe par une ligne médiane d'un axe de rotation (65) des branches de pince (45, 46).

8. Dispositif selon l'une des revendications 1 à 7, **caractérisé en ce que** l'élément de base (48) est maintenu contre une surface de référence du bras de support (44).

9. Dispositif selon l'une des revendications 1 à 8, **caractérisé en ce que** les branches de pince (45, 46) sont maintenues l'une par rapport à l'autre par au moins un ressort (69).
